# EUROPEAN PATENT SPECIFICATION

(11) **EP 3 965 989 B1**
(45) Date of publication and mention of the grant of the patent: **15.10.2025**
(21) Application number: 20801586.7
(22) Date of filing: 30.04.2020
(51) Int. Cl.: B23D 47/12, B23D 59/02, B23D 45/16

(54) **CUT-OFF SAW**
TRENNSÄGE
TRONÇONNEUSE

(30) Priority: 06.05.2019 US 201962843745 P
(43) Date of publication of application: 16.03.2022
(73) Proprietor: Milwaukee Electric Tool Corporation, Brookfield, WI 53005 (US)
(72) Inventor: SCHMITZ, Jonathan, E., Wauwatosa, WI 53226 (US); CARLSON, Mitchell, Lisbon, WI 53089 (US)
(74) Representative: Marks & Clerk LLP
(86) International application number: PCT/US2020/030732
(87) International publication number: WO 2020/227014

(56) References cited:
- EP-A2- 1 967 331
- WO-A2-2013/187837
- US-A1- 2014 084 718
- US-A1- 2017 120 436
- US-A1- 2017 120 436
- US-A1- 2018 369 939
- US-A1- 2018 369 939

## Description

### CROSS-REFERENCE TO RELATED APPLICATIONS

This application claims priority to co-pending U.S. Provisional Patent Application No. 62/843,745 filed on May 6, 2019.

### BACKGROUND OF THE INVENTION

The present disclosure relates to power tools, and more particularly to cut-off saws.

US2018/369939 relates to a cut-off saw. According to the abstract of this document there is disclosed a power tool including a housing and a support arm extending from the housing and defining a longitudinal axis. The support arm includes a first arm portion coupled to the housing and a second arm portion coupled to the first arm portion. The power tool further includes a drive pulley coupled to the first arm portion. The drive pulley defines a first axis. A driven pulley is coupled to the second arm portion and defines a second axis spaced from the first axis. A synchronous belt connects the drive pulley and the driven pulley. The second arm portion is movable relative to the first arm portion between a first configuration and a second configuration offset 180 degrees from the first configuration about the longitudinal axis. A distance between the first axis and the second axis is substantially the same in both the first configuration and the second configuration.

US 2018/369939 A1 also discloses a cut-off saw comprising a housing; a brushless electric motor supported within the housing, the motor including an output shaft operable at a maximum speed greater than 10,000 revolutions per minute; a battery pack coupled to the housing for providing power to the motor; a drive pulley coupled to the output shaft; a driven pulley connected to the drive pulley by a synchronous belt; and a cutting wheel coupled to the driven pulley for co-rotation therewith.

### SUMMARY OF THE INVENTION

According to the invention, a cut-off saw includes a housing, a brushless electric motor supported within the housing, and a battery pack coupled to the housing for providing power to the motor. The battery pack has a nominal voltage up to 20 volts and is configured to output at least 100 amperes of current to the motor to sustain a power output of at least 1800 watts. The motor has an output shaft operable at a maximum speed greater than 10,000 revolutions per minute. The cut-off saw further includes a drive pulley coupled to the output shaft, a driven pulley connected to the drive pulley by a synchronous belt, and a cutting wheel coupled to the driven pulley for co-rotation therewith. The cutting wheel has an outer diameter of 22.9cm (9 inches).

The cut-off saw may further include a support arm coupled to and extending from the housing in a first direction, the cutting wheel being supported by the support arm, a rear handle extending from the housing in an opposite, second direction, and a battery receptacle defined by the housing in which the battery pack is receivable. The battery pack may be positioned between the cutting wheel and the rear handle. The cut-off saw may also include a battery cover coupled to the housing. The battery cover may be selectively moveable between a closed position, in which the battery pack is enclosed by the battery receptacle and the cover, and an open position, in which the battery pack is accessible.

The cut-off saw may further include a support arm coupled to and extending from the housing in a first direction, the cutting wheel being supported by the support arm, and a rear handle extending from the housing in an opposite, second direction. The housing may define a rear intake opening adjacent the rear handle in communication with an interior of the housing, a front intake opening adjacent the motor and in communication with the interior of the housing, and an exhaust opening adjacent the motor and in communication with the interior of the housing. In response to activation of the motor, a first cooling airflow may be induced through the front intake opening, through the motor, and discharged from the exhaust opening. Also, in response to activation of the motor, a separate, second cooling airflow may be induced through the rear intake opening, through the interior of the housing, through the motor, and discharged from the exhaust opening.

Other aspects of the disclosure will become apparent by consideration of the detailed description and accompanying drawings.

### BRIEF DESCRIPTION OF THE DRAWINGS

FIG. 1 is a perspective view of a cut-off saw.
FIG. 2 is another perspective view of the cut-off saw of FIG. 1.
FIG. 3 is a cross-sectional view of the cut-off saw of FIG. 1 taken along line 3-3.
FIG. 4 is a perspective view of the cut-off saw of FIG. 1, illustrating a drive train.
FIG. 5 is a cross-sectional view of the cut-off saw taken along line 5-5 of FIG. 1.
FIG. 6 is a partial perspective view of the cut-off saw with a battery cover in an open position.
FIG. 7 is a partial side view of a handle of the cut-off saw of FIG. 1 with a portion removed.
FIG. 8 is a partial perspective view of the cut-off saw of FIG. 1, illustrating the battery cover in a closed position.
FIG. 9 is a top view of an indicator on the cut-off saw of FIG. 1.
FIG. 10 is a cross-sectional view of the cut-off saw of FIG. 1 taken along line 10-10.
FIG. 11 is a cross-sectional view of the cut-off saw of FIG. 1 taken along line 11-11.

Before any embodiments of the disclosure are explained in detail, it is to be understood that the disclosure is not limited in its application to the details of construction and the arrangement of components set forth in the following description or illustrated in the accompanying drawings. The disclosure is capable of supporting other embodiments and of being practiced or of being carried out in various ways.

### DETAILED DESCRIPTION

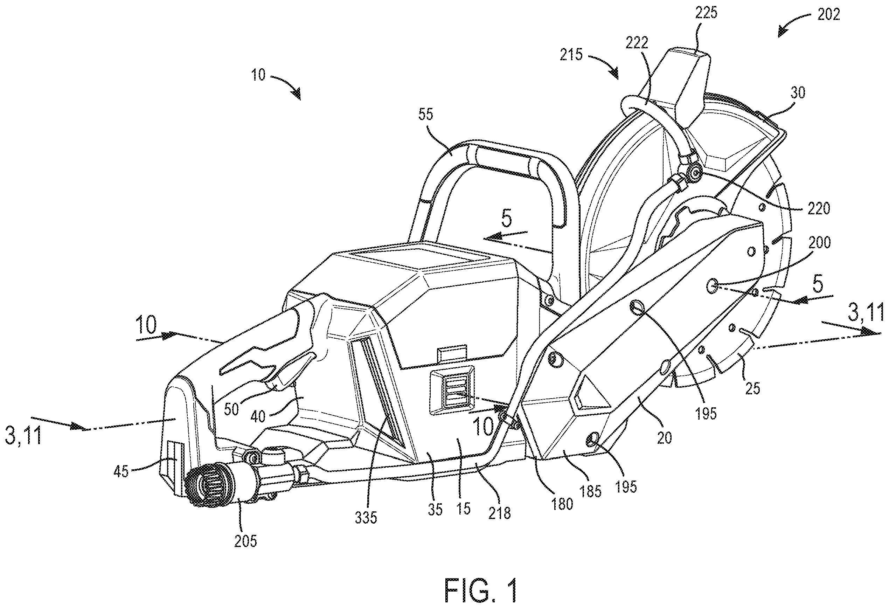

FIG. 1 illustrates a handheld power tool 10, which is a cut-off saw in the illustrated embodiment. The saw 10 includes a housing 15, a support arm 20 coupled to and extending from the housing 15, a cutting wheel 25 (e.g., saw blade) carried by the support arm 20, and a guard 30 covering a portion of the circumference of the cutting wheel 25. The cutting wheel 25 can be a blade, an abrasive disk, or any other rotatable element capable of removing material from a workpiece. According to the invention, the cutting wheel 25 has a nominal outer diameter of 22.9cm (9 inches). In the illustrated embodiment, the guard 30 is rotatably coupled to the support arm 20 to provide a variety of operating positions that expose different circumferential portions of the cutting wheel 25. This advantageously allows the saw 10 to be used in a variety of cutting positions.

Referring again to FIG. 1, the illustrated housing 15 is a clamshell housing having left and right cooperating halves 35, 40. A first or rear handle 45 extends from a rear portion of the housing 15 in a direction generally opposite the support arm 20. A trigger 50 for operating the saw 10 is located on the rear handle 45. In the illustrated embodiment, the saw 10 also includes a second or forward handle 55 that wraps around an upper portion of the housing 15. The forward handle 55 and the rear handle 45 provide grip areas to facilitate two-handed operation of the saw 10.

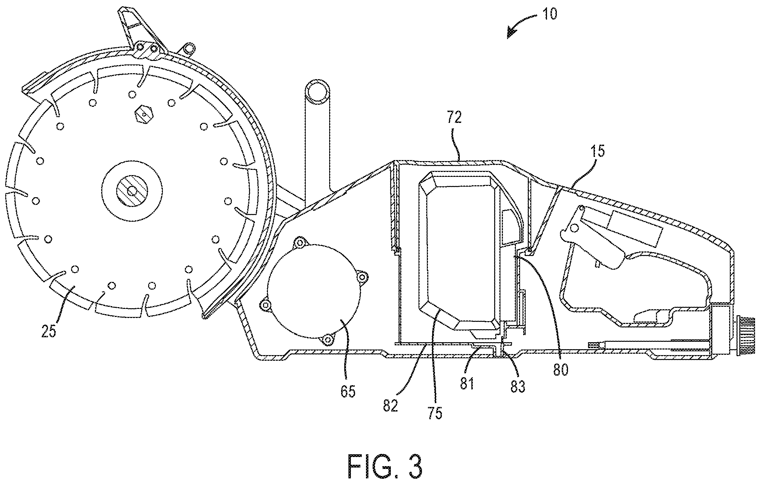

Referring to FIG. 3, the saw 10 further includes an electric motor 65 located within the housing 15 at a front, lower portion of the housing 15. The motor 65 is preferably a brushless direct-current ("BLDC") motor. Operation of the motor 65 is governed by a motor controller on a printed circuit board ("PCB"), not shown.

With continued reference to FIG. 3, the illustrated saw 10 is a cordless electric saw and includes a battery receptacle 72 defined in the housing 15 and a battery pack 75 that provides power to the motor 65, disposed within the battery receptacle 72. The battery receptacle 72 and the battery pack 75 are positioned behind the forward handle 55. In the illustrated embodiment, the battery receptacle 72 is a separate compartment of the housing 15 from the motor 65. In some embodiments, the battery pack 75 and the motor 65 may be disposed in the same compartment and/or housing. The battery pack 75 is removably coupled to a battery mount 80, which is located inside the battery receptacle 72 adjacent the rear handle 45. The battery mount 80 includes parallel rails that are engageable with corresponding parallel grooves (not shown) defined in the battery pack 75 to mechanically interconnect the battery pack 75 to the battery receptacle 72. The battery mount 80 also includes electrical terminals (also not shown) that electrically connect with corresponding electrical terminals on the battery pack 75 during insertion of the battery pack 75 into the battery receptacle 72. The illustrated battery pack 75 is a power tool battery pack having a plurality of rechargeable battery cells (not shown). The battery cells may be lithium-based or have any other suitable chemistry.

In the illustrated embodiment, the motor 65 and the battery pack 75, together, form a high power battery-powered system like the one disclosed in U.S. Patent Application No. 16/045,513 filed July 25, 2018 (U.S. Patent Application Publication No. 2019/0044110). As such, the battery pack 75 has a nominal voltage of up to about 20 volts (V) (e.g., about 18 V to about 20 V). And, the battery pack 75 and motor 65 are operable to produce a high power output - a peak power of 1800 watts (W) to 2400 W or more (2.4 horsepower (hp) to 3.0 hp or more) - equal to or greater than the power output of a single-cylinder internal combustion engines typically used in cut-off saws. In order to achieve this peak power when the saw blade 25 is loaded (i.e., performing work on a workpiece), a high current (e.g., 100 amperes (A) or more) is discharged from the battery pack 75, through the terminals in the battery mount 80, through the motor controller, and to the motor 65. However, when there is no load placed on the saw blade 25, the motor 65 draws approximately between 14 A and 18 A from the battery pack 75.

With continued reference to FIG. 3, the battery receptacle 72 defines a drainage hole 81 to direct fluid that may have entered the battery receptacle 72 (e.g., from a fluid distribution system 202, which is described in more detail below). The drainage hole 81 is located in a bottom surface 82 of the battery receptacle 72. In the illustrated embodiment, the bottom surface 82 may be angled downwards in a direction from the forward handle 55 to the rear handle 45 to direct fluid that enters the battery receptacle 72 to the drainage hole 81. The drainage hole 81 communicates with a closed passage 83 that extends axially through the housing 15, to the exterior of the housing 15.

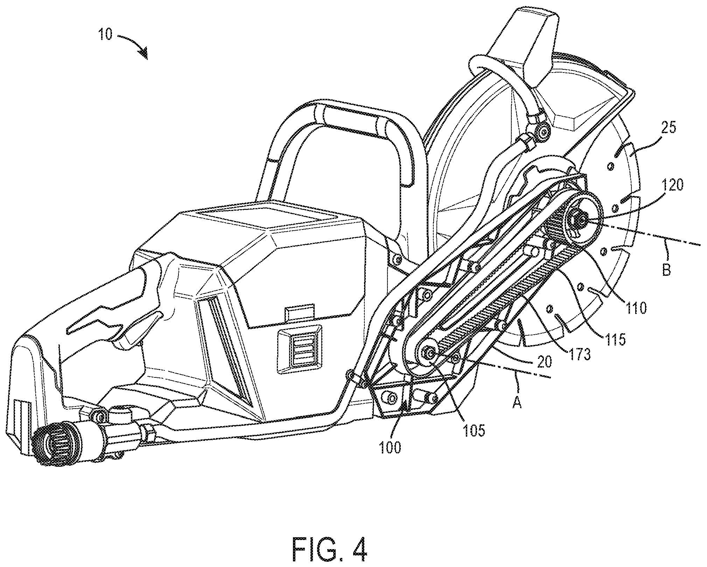

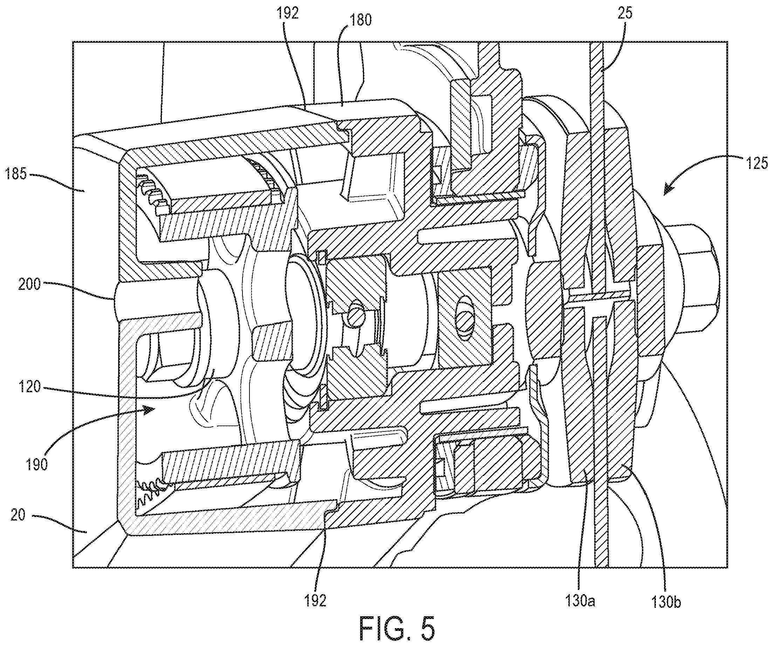

With reference to FIG. 4, the saw 10 includes a drive assembly 100 positioned in the support arm for transmitting torque from the motor 65 to the cutting wheel 25. The drive assembly 100 includes a drive pulley 105 fixed to an output shaft of the motor 65, a driven pulley 110 connected to the drive pulley 105 by a belt 115, and a spindle 120 fixed to the driven pulley 110. The drive pulley 105 defines a first rotation axis A and the driven pulley 110 defines a second rotation axis B spaced from the first rotation axis A. The saw 10 does not include a tensioning mechanism for the belt 115. As such, the distance between the first and second rotational axes A, B is fixed. In some embodiments, a clutch mechanism may be provided between the motor output shaft and the drive pulley 105 to selectively interrupt torque transfer between the motor output shaft and the drive pulley 105. The drive assembly 100 further includes a clamp assembly 125 having clamping disks 130a, 130b that secure the cutting wheel 25 to the spindle 120 (FIG. 5).

With reference to FIG. 4, the illustrated belt 115 is a synchronous belt having a plurality of teeth 173 extending laterally across a width of the belt 115. The teeth 173 are engageable with corresponding teeth on the driven pulley 110 and the drive pulley 105. The toothed engagement between the synchronous belt 115 and the pulleys 105, 110 prevents the belt 115 from slipping under high loads as may otherwise occur with a V-belt. In addition, the relatively flat profile of the synchronous belt 115 allows the drive pulley 105 to be smaller in diameter when compared with a v-belt configuration. As such, a higher reduction can be achieved between the drive pulley 105 and the driven pulley 110. For example, in some embodiments, the drive pulley 105 and the driven pulley 110 may be sized to provide a 4:1 reduction in rotational speed from the motor output shaft to the spindle 120. In other embodiments, the drive pulley 105 and the driven pulley 110 may be sized to provide between a 3:1 and a 5:1 reduction from the motor output shaft to the spindle 120.

This relatively high reduction ratio advantageously eliminates the need for a separate gearbox or gear reduction stage between the motor output shaft and the drive pulley 105, thereby improving mechanical efficiency and reducing the size, cost, and weight of the drive assembly 100. In the illustrated embodiment, the drive assembly 100 has a mechanical efficiency (i.e. a ratio of power at the spindle 120 to power at the output shaft of the motor) between about 95 percent and about 98 percent. In contrast, a drive assembly requiring a gearbox may have a mechanical efficiency of only about 92 percent or less. The relatively high reduction ratio also can allow the motor 65 to spin at a higher rate compared to V-belt and direct drive configurations, which can improve cooling and performance. In some embodiments, the motor 65 has a maximum output speed greater than 10,000 RPM. In other embodiments, the motor 65 has a maximum output speed between about 10,000 RPM and about 30,000 RPM. As such, the drive assembly 100 transfers rotation of the motor output shaft to the saw blade 25 to selectively rotate the saw blade 25 at up to 7,000 RPM. In the illustrated embodiment, the saw blade 25 rotates at a speed of about 6,000 RPM at maximum performance while maintaining battery efficacy. Finally, the synchronous belt 115 advantageously does not require tensioning. Accordingly, the saw 10 need not include means for adjusting the tension of the belt 115, which reduces the weight, complexity, and cost of the drive assembly 100. In addition, the saw's performance will remain relatively consistent over the lifetime of the belt 115. In contrast, V-belts typically stretch after a period of ordinary operation and must be manually or automatically tensioned from time to time to prevent slippage.

As shown in FIG. 1, the support arm 20 includes a support portion 180 coupled to the housing 15 and an arm cover 185 coupled to the support portion 180. Together, the support portion 180 and the arm cover 185 define a chamber 190 in which the drive assembly 100 is disposed. In addition, the support portion 180 and the arm cover 185 abut to define a sealing surface 192 (FIG. 5). The sealing surface 192 prevents the ingress of debris and liquid from entering the chamber 190. In some embodiments, a gasket may be positioned on or adjacent the sealing surface 192 to further prevent environmental conditions such as water, dust, debris of the like access to the chamber 190. The arm cover 185 is removably coupled to the support portion 180 with fasteners 195. A user may loosen the fasteners 195 and remove the arm cover 185 to allow access to the chamber 190 and the drive assembly 100. The arm cover 185 is a single piece cover and includes an aperture 200 that extends into the chamber 190. Moving to FIG. 5, the aperture 200 is port to vent the chamber 190 to the atmosphere. In the illustrated embodiment, the aperture is approximately 6.25 mm in diameter. In other embodiments, the aperture may have a diameter between approximately 5 mm and 10 mm.

With reference to FIG. 1, the illustrated saw 10 further includes a fluid distribution system 202. The fluid distribution system 202 includes a connector 205 coupled to the lower portion of the housing 15 and a distributor 215 coupled to the guard 30. A supply line (not shown) can be attached to the connector 205 to provide fluid such as water to the fluid distribution system 202 from an external source (not shown). A first line 218 extends from the connector 205 around the support arm 20 and to the distributor 215. In some embodiments, the support arm 20 may define a groove along which the first line 218 extends. The groove may assist in positioning the hose while maintaining a low profile. In the illustrated embodiment, the distributor 215 includes a pair of spray nozzles 220 disposed on opposite sides of the guard 30 connected by a supply line 222. The spray nozzles 220 are operable to discharge fluid onto each side of the cutting wheel 25 for cooling, lubrication, and dust abatement. In the illustrated embodiment, an auxiliary handle 225 is attached to the guard 30 that can be grasped by a user to facilitate adjusting an angular position of the guard 30. However, the handle 225 may alternatively be located elsewhere on the guard 30 remote from the supply line 222.

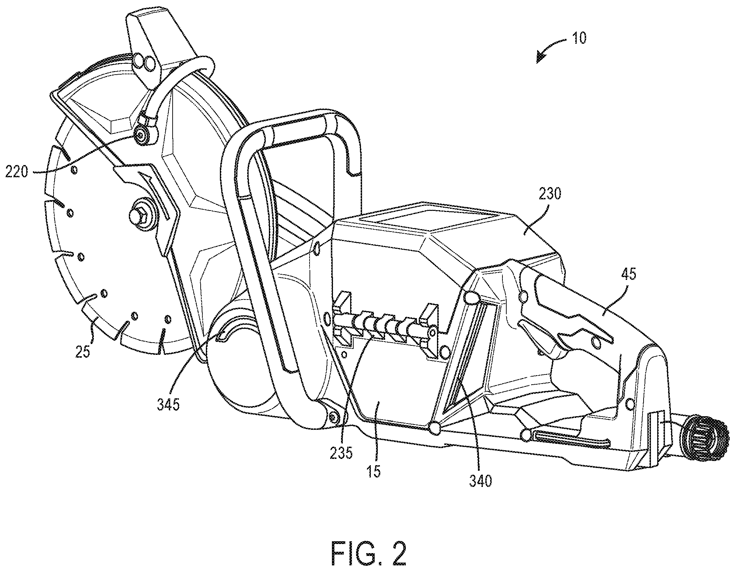

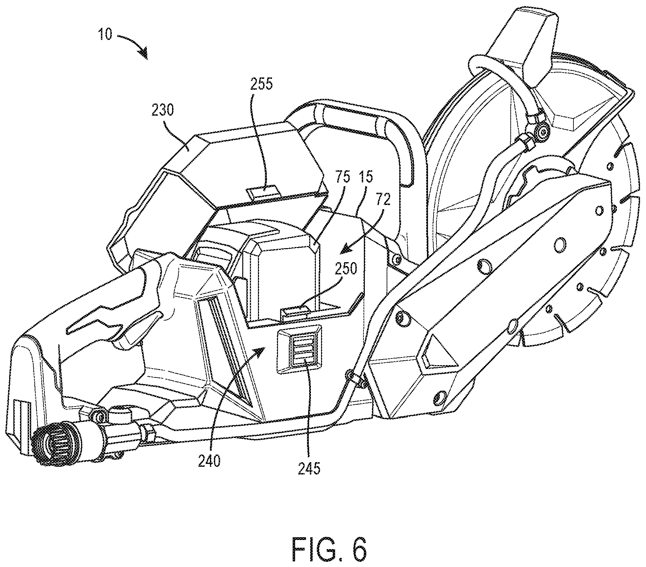

With reference to FIG. 6, the saw 10 includes a battery cover 230 that is coupled to the housing 15 by a hinge 235 (FIG. 2). The cover 230 is pivotable about the hinge 235 between a closed position, in which the battery pack 75 is enclosed by the battery receptacle 72 and the cover 230, and an open position, in which the battery pack 75 is accessible. The cover 230 is maintained in the closed position with a latch 240. The latch 240 includes an actuator 245 and a hook 250 coupled to the actuator 245. The hook 250 is engageable with a detent 255 positioned on the cover 230 to hold the cover 230 in the closed position. A user may press the actuator 245 to move the hook 250 out of the detent 255, allowing the cover 230 to rotate about the hinge 235 toward the open position. The cover 230, when in the closed position, prevents dust, debris, and water from the surrounding environment of the saw 10 from entering the battery receptacle 72. In some embodiments, a gasket or seal may be positioned between the cover 230 and the housing 15.

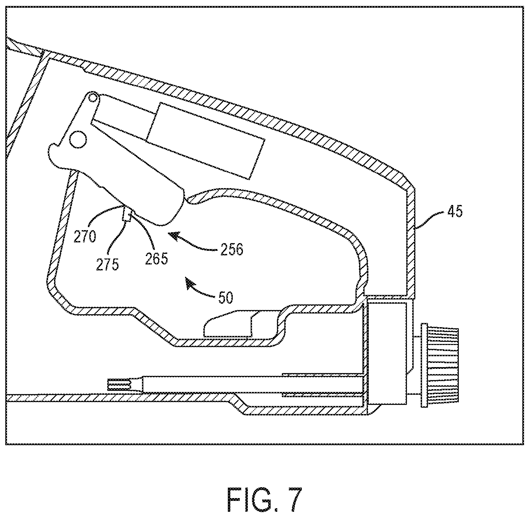

A shown in FIGS. 7, the trigger 50 is a dual-activation trigger. In other words, the trigger 50 includes a lockout mechanism 256 to prevent unwanted operation of the saw 10. The lockout mechanism 256 includes a lever 265. The lever 265 is rotatably coupled to the trigger 50 and includes a first end 270 and a second end 275 opposite the first end 270. A resilient member (not shown) biases the lever 265 to a lockout position, in which, the second end 275 of the lever 265 extends from the trigger 50 preventing the trigger 50 from being depressed. A user may press the second end 275 of the lever 265 forward towards the saw blade 25 to rotate the first end 270 of the lever 265. The lever 265 aligns with an outer surface of the trigger 50 allowing the trigger 50 to be depressed to activate the saw 10.

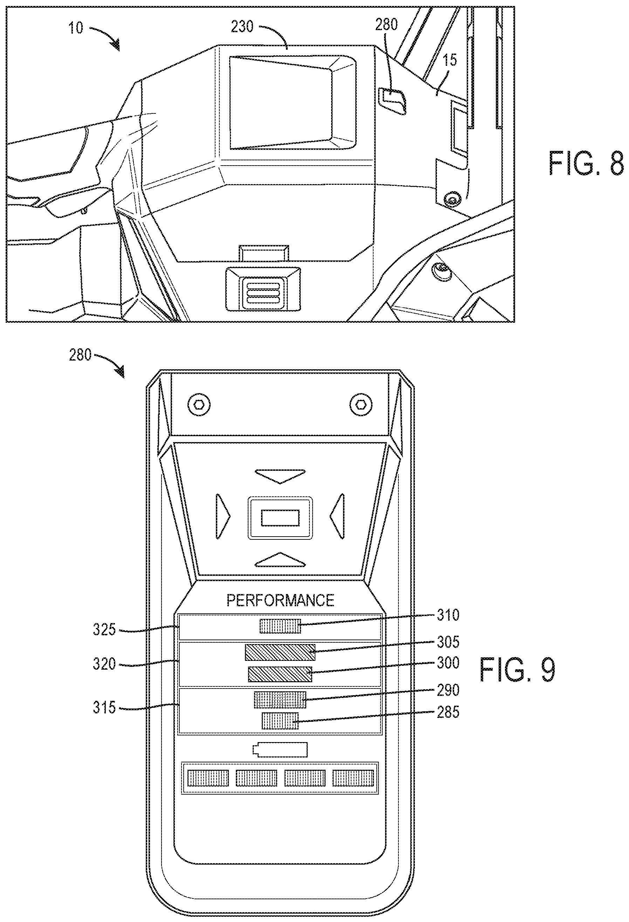

Referring to FIGS. 8 and 9, the saw 10 includes an eco-indicator 280 to assist a user in operating the saw 10. The eco-indicator 280 is positioned on a top side of the housing 15 adjacent the battery cover 230. In other embodiments, the indicator 280 may be positioned on other locations on the housing 15. Preferably, the eco-indicator 280 is positioned on the housing 15 within a line of sight of a user during operation of the saw 10. Moving to FIG. 9, the eco-indicator 280 is provided to indicate an amount of power being used by the saw 10 during operation (i.e., an amount of current being drawn from the battery pack 75). In the example illustrated, the eco-indicator 280 includes five LED bars 285, 290, 300, 305, and 310. The LED bars 285, 290, 300, 305, and 310 are distributed in a performance map that is segmented into a plurality of performance regions 315, 320, and 325 for operating the saw 10. When a user operates the saw 10, the LED bars 285, 290, 300, 305, and 310 are illuminated based on the system performance of the saw 10. When the LED bars 300 and 305 are illuminated in the performance region 320, the user will be aware that the saw 10 is at optimal performance. Accordingly, the user is coached to achieve and maintain optimal performance of the saw 10. Further, the LED bars 285, 290, 300, 305, and 310 may be colored differently to provide further system performance indications to the user. For example, the LED bars 300 and 305 in the second performance region 320 may be colored green to indicate optimal performance, the LED bars 285, 290, and 310 in performance regions 315, 325 may be colored yellow or red to indicate sub-optimal performance. Further disclosure of the eco-indicator 280 is found in U.S. Patent Application Serial No. 16/272,182 filed February 11, 2019, the entire content of which is incorporated herein by reference.

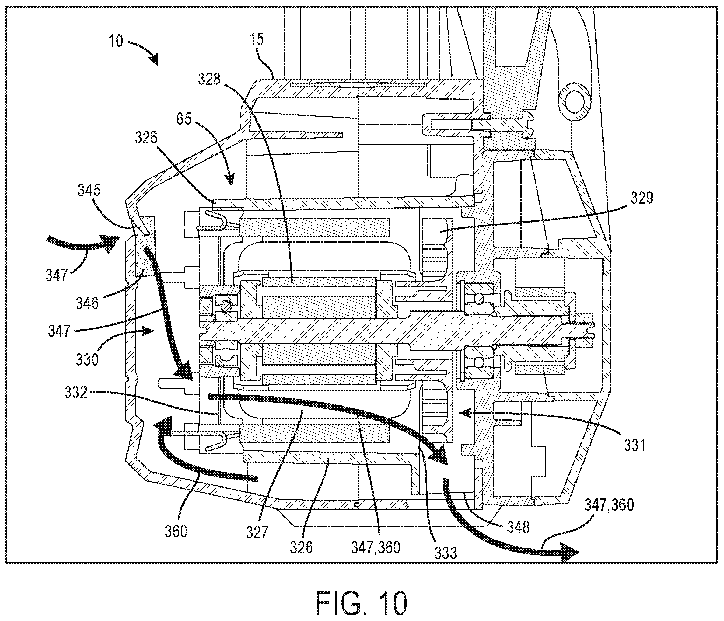

With reference to FIG. 10, the motor 62 includes a motor housing 326, a stator 327 supported within the motor housing 326, a rotor 328 rotatably supported within the motor housing 326, and a cooling fan 329. The motor housing 326 includes an inlet end 330 and an outlet end 331 opposite the inlet end 330. The inlet end 330 defines an aperture 332 that extends into the motor housing 326. The outlet end 331 defines an exhaust port 333 in communication with the inlet end 330. The exhaust port 333 is positioned beneath the motor 65 on a bottom side of the housing 15. The aperture 332 and the exhaust port 333 are open in different directions from one another. In other words, the aperture 332 opens in a first direction and the exhaust port opens in a second direction that is different from the first direction. In the illustrated embodiment, the aperture 332 opens in a direction that is generally perpendicular to the direction that the exhaust port 333 opens. In other embodiments, the aperture 332 may open in a similar direction as the exhaust port 333 or may open in an oblique direction to the exhaust port 333.

In the illustrated embodiment, the saw 10 further includes a cooling airflow that extends through the housing 15. The illustrated housing 15 includes a first rear intake opening 335 (FIG. 1), a second rear intake opening 340 (FIG. 2), and a front intake opening 345 (FIG.2). The first and second rear intake openings 335, 340 are positioned adjacent the rear handle 45 and in communication with the interior of the housing 15. The first and second rear intake openings 335, 340 are defined by linear slots and face away from the saw blade 25. The front intake opening 345 is positioned adjacent the inlet end 330 of the motor housing 326 of the motor 62 and in communication with the interior of the housing 15. The front intake opening 345 is defined by an arcuate slot. A filter 346 (FIG. 10) may be positioned adjacent the front intake opening 345 and inside the housing 15. The position of the intake openings 335, 340, 345 facing away from the saw blade 25 helps to shield the openings 335, 340, 345 from fluid, dust, and debris present during operation of the saw 10.

With reference to FIG. 10, a first cooling airflow 347 is induced by the fan 329 of the motor 62. The first cooling airflow 347 is drawn by the fan 329 through the front intake opening 345 and the filter 346. The first cooling airflow 347 is then drawn through the aperture 332 defined by the inlet end 330 and into the motor housing 326 to cool the stator 327 and the rotor 328. The first cooling airflow 347 is then discharged radially through the exhaust port 333 defined by the outlet end 331 of the motor housing 326 and through slotted exhaust openings 348 located on a bottom portion of the housing 15 adjacent the motor 62 and in communication with the interior of the housing 15.

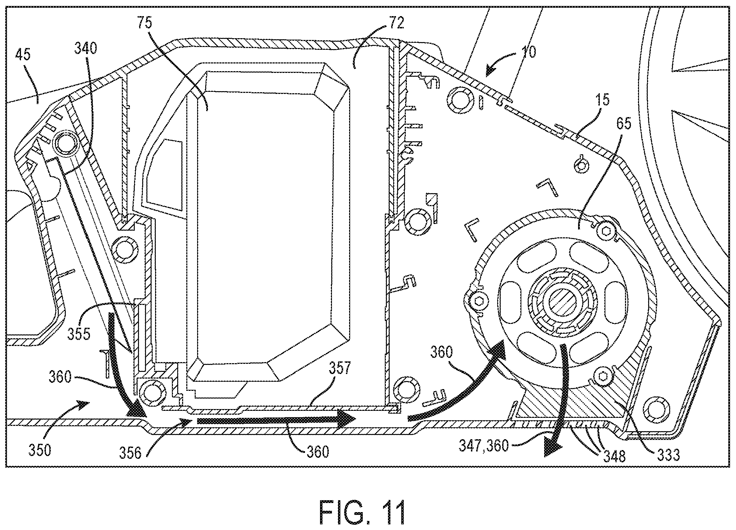

With reference to FIG. 11, the first and second rear intake openings 335, 340 communicate with an air space 350 that is separated from the interior of the battery receptacle 72 by a wall 355. The air space 350 extends through a passageway 356 defined between a bottom wall 357 of the battery receptacle 72 and the housing 15. The passageway 356 is positioned between the rear intake openings 335, 340 and the exhaust port 333. In other words, the air space 350 extends underneath the battery receptacle 72 to an interior portion of the housing 15 adjacent the motor 62. A second cooling airflow 360 is induced by the fan 329 of the motor 62. The second cooling airflow 360 is drawn by the fan 329 through the first and second rear intake openings 335, 340 and into the air space 350. The second cooling airflow 360 is drawn under the battery receptacle 72 and into the passageway 356, cooling the battery pack 75 and other electronic components within the housing 15 and proximate the battery receptacle 72. After passing under the battery receptacle 72, the second cooling airflow 360 merges with the first cooling airflow 347 adjacent the inlet end 330 of the motor housing 326 (FIG. 10). Together, the first cooling airflow 347 and the second cooling airflow 360 are drawn into the motor housing 326 and discharged radially through the exhaust port 333 and the slotted exhaust openings 348.

In the illustrated embodiment, the bare cut-off saw 10 (i.e., without the battery pack 75 or the blade 25 attached) weighs between approximately 3.6 and 5.4kg (8 and 12 pounds). Preferably, the saw 10 without the battery pack 75 or the blade 25 weighs approximately 4.5kg (10 pounds). The saw 10 with the battery pack 75 and the blade 25 weighs between approximately 5.4 and 7.3kg (12 and 16 pounds). Preferably, the saw 10 with the battery pack 75 and the blade 25 weighs between approximately 6.4 and 6.8kg (14 and 15 pounds).

The cut-off saw 10 advantageously provides more powerful cutting performance than other cut-off saws of a similar size. As such, the saw 10 may provide quicker cutting times than other saws. For example, the saw 10 may cut through 15.9mm (5/8-inch) rebar in less than seven seconds. In some embodiments, the saw 10 may cut through 15.9mm (5/8-inch) rebar in less than five seconds. Additionally, the saw 10 may to cut a 15.2cm (6-inch) thick slab of concrete at full depth for a distance of 91.4cm (36 inches) in less than 180 seconds. In other embodiments, the saw 10 may cut a 15.2cm (6-inch) thick slab of concrete at full depth for a distance of 91.4cm (36 inches) in less than 115 seconds. Another example, the saw 10 may cut concrete at a depth of 2.5cm (1 inch) for a length of 91.4cm (36 inches) in under 80 seconds. In further embodiments, the saw 10 may cut concrete at a depth of 2.5cm (1 inch) for a length of 91.4cm (36 inches) in under 60 seconds.

The drive assembly 100 of the saw 10 advantageously provides for quieter operation compared to typical cut-off saws having an internal combustion engine. Internal combustion engines ignite fuel in order to convert thermal energy into mechanical energy. As such, the ignition causes excessive noise. In addition, internal combustion engines are inherently imbalanced due to a reciprocating piston or pistons contained therein. This imbalance produces additional noise. The cut-off saw 10, which includes the brushless electric motor 65 and the battery pack 75 instead of an internal combustion engine, emits less noise than a typical cut-off saw having an equivalent power output because the internal combustion engine is eliminated. As such, the saw 10 may produce less than 0.01 W/m² (100 dBa) during operation and without any load. In some embodiments, the saw 10 produces less than 0.001 W/m² (90 dBa) during operation. In some embodiments, the saw 10 produces less than 0.0001 W/m² (80 dBa) during operation.

The saw 10 also advantageously produces less vibration than typical cut-off saws having an internal combustion engine. As discussed above, internal combustions, due to inherent imbalance of reciprocating components, produces vibration. As such, the saw 10, which includes the brushless electric motor 65 and the battery pack 75 instead of an internal combustion engine, emits less vibration than a typical cut-off saw having an equivalent power output because the internal combustion engine is eliminated. For example, accelerometers were positioned on the saw 10 to measure the arm to hand vibration (HAV) at both the front and rear handle 45, 55. The saw 10 may produce an average no-load HAV that is less than 3.0 m/s² at either or both the forward handle 55 and the rear handle 45. In other embodiments, the saw 10 may produce an average no-load HAV that is less than 2.5 m/s² at either or both the forward handle 55 and the rear handle 45. In some embodiments, the saw 10 may produce an average plunge cut (i.e., a cut where the saw blade is at full depth within a workpiece) HAV that is less than 3.5 m/s².

Various features of the disclosure are set forth in the following claims.

## Claims

1. A cut-off saw (10) comprising:
a housing (15);
a brushless electric motor (65) supported within the housing, the motor including an output shaft operable at a maximum speed greater than 10,000 revolutions per minute;
a battery pack (75) coupled to the housing for providing power to the motor, the battery pack includes a nominal voltage up to 20 volts and is configured to output at least 100 amperes of current to the motor to sustain a power output of at least 1800 watts;
a drive pulley (105) coupled to the output shaft;
a driven pulley (110) connected to the drive pulley by a synchronous belt (115); and
a cutting wheel (25) coupled to the driven pulley for co-rotation therewith, the cutting wheel having an outer diameter of 22.9 cm (9 inches).

2. The cut-off saw of claim 1, wherein the cut-off saw produces a sound pressure less than 0.01 W/m² (100 decibels).

3. The cut-off saw of claim 1, wherein the cut-off saw weighs less than 6.8kg (15 pounds).

4. The cut-off saw of claim 1, wherein the cutting wheel (25) is operable to rotate between 5,900 revolutions per minute and 6,300 revolutions per minute.

5. The cut-off saw of claim 1,
(A) further comprising a handle (45, 55) configured to be grasped by an operator during operation of the cut-off saw, wherein the cut-off saw is configured to produce a hand-arm vibration at the handle less than 3.0 m/s² during operation without a load on the cutting wheel;
or
(B) wherein the motor (65) is configured to sustain a power output between 1800 watts and 2400 watts;
or
(C) wherein the motor (65) is configured to draw between 14 amperes and 18 amperes of current without a load placed on the cutting wheel (25);
or
(D) wherein the drive pulley (105) and the driven pulley (110) define first and second rotational axes (A, B), respectively, and wherein a distance between the first and second rotational axes is fixed;
or
(E) wherein the drive pulley (105) and the driven pulley (110) are sized to provide a 4:1 reduction in rotational speed from the motor (65) output shaft to the cutting wheel (25);
or
(F) wherein the motor (65) output shaft has a maximum output speed between 10,000 revolutions per minute and 30,000 revolutions per minute.

6. The cut-off saw of claim 1, further comprising:
a support arm (20) coupled to and extending from the housing (15) in a first direction, wherein the cutting wheel (25) is supported by the support arm;
a rear handle (45) extending from the housing in an opposite, second direction, wherein the battery pack (75) is positioned between the cutting wheel and the rear handle;
a battery receptacle (72) defined by the housing in which the battery pack is receivable; and
a battery cover (230) coupled to the housing, the battery cover selectively moveable between a closed position, in which the battery pack is enclosed by the battery receptacle and the cover, and an open position, in which the battery pack is accessible.

7. The cut-off saw of claim 6, wherein the rear handle (45) is positioned entirely behind the battery receptacle (72) relative to the cutting wheel (25).

8. The cut-off saw of claim 6,
(A) further comprising a forward handle (55) that wraps around an upper portion of the housing (15); and, optionally, wherein the battery receptacle (72) is positioned between the forward handle and the rear handle (45);
or
(B) wherein the battery receptacle (72) is positioned in a separate compartment of the housing (15) from the motor (65);
or
(C) wherein the cover (230) is maintained in the closed position with a latch (240);
or
(D) wherein the battery pack (75) is removable from the battery receptacle (72) when the cover (230) is in the open position;
or
(E) wherein the battery receptacle (72) defines a drainage hole (81) that extends from the battery receptacle to an exterior of the housing (15).

9. The cut-off saw of claim 1, further comprising:
a support arm (20) coupled to and extending from the housing (15) in a first direction, wherein the cutting wheel (25) is supported by the support arm; and
a rear handle (45) extending from the housing in an opposite, second direction;
wherein the housing defines
a rear intake opening (335) adjacent the rear handle in communication with an interior of the housing,
a front intake opening (345) adjacent the motor (65) and in communication with the interior of the housing, and
an exhaust opening (333) adjacent the motor and in communication with the interior of the housing;
wherein in response to activation of the motor, a first cooling airflow (347) is induced through the front intake opening, through the motor, and discharged from the exhaust opening; and
wherein in response to activation of the motor, a separate, second cooling airflow (360) is induced through the rear intake opening, through the interior of the housing, through the motor, and discharged from the exhaust opening.

10. The cut-off saw of claim 9, wherein the motor (65) includes a fan (329) configured to induce the first and second airflows (347, 360) when the motor is activated.

11. The cut-off saw of claim 9, wherein the exhaust opening (333) is positioned beneath the motor (65) on a bottom portion of the housing (15).

12. The cut-off saw of claim 9, wherein the first airflow (347) and the second airflow (360) are discharged radially through the exhaust opening (333).

13. The cut-off saw of claim 9,
(A)wherein the second airflow (360) is drawn through a passageway (356) defined between a bottom wall (357) of the battery receptacle (72) and the housing (15), and wherein the passageway is located between the rear intake opening (335) and the exhaust opening (333);
or
(B) wherein the rear intake opening (335) faces away from the cutting wheel (25);
or
(C) wherein the rear intake opening (335) is defined by a linear slot;
or
(D) wherein the rear intake opening (335) is a first rear intake opening, and wherein the housing (15) defines a second rear intake opening (340) adjacent the rear handle (45) and in communication with the interior of the housing (15);
or
(E) further comprising a filter (346) positioned within the housing (15) and adjacent the front intake opening (345).

## Patentansprüche

1. Trennsäge (10), umfassend:
ein Gehäuse (15);
einen bürstenlosen Elektromotor (65), der innerhalb des Gehäuses gestützt ist, wobei der Motor eine Abtriebswelle einschließt, die mit einer maximalen Drehzahl von mehr als 10.000 Umdrehungen pro Minute betrieben werden kann;
einen mit dem Gehäuse gekoppelten Batteriesatz (75) zum Bereitstellen von Leistung an den Motor, wobei der Batteriesatz eine Nennspannung von bis zu 20 Volt einschließt und konfiguriert ist, um mindestens 100 Ampere Strom an den Motor abzugeben, um eine Leistungsabgabe von mindestens 1800 Watt aufrechtzuerhalten;
eine Antriebsscheibe (105), die mit der Abtriebswelle gekoppelt ist;
eine angetriebene Riemenscheibe (110), die durch einen Synchronriemen (115) mit der Antriebsscheibe verbunden ist; und
ein Schneidrad (25), das mit der angetriebenen Riemenscheibe zur gemeinsamen Drehung mit dieser gekoppelt ist, wobei das Schneidrad einen Außendurchmesser von 22,9 cm (9 Zoll) aufweist.

2. Trennsäge nach Anspruch 1, wobei die Trennsäge einen Schalldruck von weniger als 0,01 W/m² (100 Dezibel) produziert.

3. Trennsäge nach Anspruch 1, wobei die Trennsäge weniger als 6,8 kg (15 Pfund) wiegt.

4. Trennsäge nach Anspruch 1, wobei das Schneidrad (25) betrieben werden kann, um zwischen 5.900 Umdrehungen pro Minute und 6.300 Umdrehungen pro Minute zu drehen.

5. Trennsäge nach Anspruch 1,
(A) weiter umfassend einen Griff (45, 55), der konfiguriert ist, um von einem Bediener im Laufe des Betriebs der Trennsäge ergriffen zu werden, wobei die Trennsäge konfiguriert ist, um im Laufe des Betriebs ohne eine Belastung des Schneidrads an dem Griff eine Hand-Arm-Vibration von weniger als 3,0 m/s² zu produzieren;
oder
(B) wobei der Motor (65) konfiguriert ist, um eine Leistungsabgabe zwischen 1800 Watt und 2400 Watt aufrechtzuerhalten;
oder
(C) wobei der Motor (65) konfiguriert ist, um ohne eine an dem Schneidrad (25) platzierte Belastung zwischen 14 Ampere und 18 Ampere Strom zu ziehen;
oder
(D) wobei die Antriebsscheibe (105) und die angetriebene Riemenscheibe (110) jeweils eine erste und eine zweite Drehachse (A, B) definieren und wobei ein Abstand zwischen der ersten und der zweiten Drehachse fest ist;
oder
(E) wobei die Antriebsscheibe (105) und die angetriebene Riemenscheibe (110) bemessen sind, um eine Reduktion der Drehgeschwindigkeit von der Abtriebswelle des Motors (65) zu dem Schneidrad (25) von 4:1 bereitzustellen;
oder
(F) wobei die Abtriebswelle des Motors (65) eine maximale Ausgangsdrehzahl zwischen 10.000 Umdrehungen pro Minute und 30.000 Umdrehungen pro Minute aufweist.

6. Trennsäge nach Anspruch 1, weiter umfassend:
einen Stützarm (20), der an das Gehäuse (15) gekoppelt ist und sich von diesem in eine erste Richtung erstreckt, wobei das Schneidrad (25) durch den Stützarm gestützt wird;
einen hinteren Griff (45), der sich von dem Gehäuse in eine entgegengesetzte, zweite Richtung erstreckt, wobei der Batteriesatz (75) zwischen dem Schneidrad und dem hinteren Griff positioniert ist;
eine Batterieaufnahme (72), die durch das Gehäuse definiert ist, in dem der Batteriesatz aufgenommen werden kann; und
eine mit dem Gehäuse gekoppelte Batterieabdeckung (230), wobei die Batterieabdeckung selektiv zwischen einer geschlossenen Position, in der der Batteriesatz von der Batterieaufnahme und der Abdeckung umschlossen ist, und einer offenen Position, in der der Batteriesatz zugänglich ist, bewegt werden kann.

7. Trennsäge nach Anspruch 6, wobei der hintere Griff (45) bezüglich des Schneidrads (25) vollständig hinter der Batterieaufnahme (72) positioniert ist.

8. Trennsäge nach Anspruch 6,
(A) weiter umfassend einen vorderen Griff (55), der einen oberen Abschnitt des Gehäuses (15) umschließt; und wobei die Batterieaufnahme (72) optional zwischen dem vorderen Griff und dem hinteren Griff (45) positioniert ist;
oder
(B) wobei die Batterieaufnahme (72) in einem von dem Motor (65) separaten Kompartiment des Gehäuses (15) positioniert ist;
oder
(C) wobei die Abdeckung (230) mit einem Riegel (240) in der geschlossenen Position gehalten wird;
oder
(D) wobei der Batteriesatz (75) aus der Batterieaufnahme (72) entnehmbar ist, wenn die Abdeckung (230) in der offenen Position vorliegt;
oder
(E) wobei die Batterieaufnahme (72) ein Abflussloch (81) definiert, das sich von der Batterieaufnahme zu einer Außenseite des Gehäuses (15) erstreckt.

9. Trennsäge nach Anspruch 1, weiter umfassend:
einen Stützarm (20), der mit dem Gehäuse (15) gekoppelt ist und sich von diesem in eine erste Richtung erstreckt, wobei das Schneidrad (25) durch den Stützarm gestützt wird; und
einen hinteren Griff (45), der sich von dem Gehäuse in eine entgegengesetzte, zweite Richtung erstreckt;
wobei das Gehäuse definiert:
eine hintere Ansaugöffnung (335) neben dem hinteren Griff, die mit einem Inneren des Gehäuses in Verbindung vorliegt,
eine vordere Ansaugöffnung (345) neben dem Motor (65) und in Verbindung mit dem Inneren des Gehäuses, und
eine Ausblasöffnung (333) neben dem Motor und in Verbindung mit dem Inneren des Gehäuses;
wobei als Reaktion auf Aktivierung des Motors ein erster Kühlluftstrom (347) durch die vordere Ansaugöffnung, durch den Motor hindurch, induziert wird und aus der Ausblasöffnung ausgestoßen wird; und
wobei als Reaktion auf Aktivierung des Motors ein separater zweiter Kühlluftstrom (360) durch die hintere Ansaugöffnung, durch das Innere des Gehäuses hindurch, durch den Motor hindurch, induziert wird und aus der Ausblasöffnung ausgestoßen wird.

10. Trennsäge nach Anspruch 9, wobei der Motor (65) ein Gebläse (329) einschließt, das konfiguriert ist, um den ersten und zweiten Luftstrom (347, 360) zu induzieren, wenn der Motor aktiviert wird.

11. Trennsäge nach Anspruch 9, wobei die Ausblasöffnung (333) unterhalb des Motors (65) an einem unteren Abschnitt des Gehäuses (15) positioniert ist.

12. Trennsäge nach Anspruch 9, wobei der erste Luftstrom (347) und der zweite Luftstrom (360) radial durch die Ausblasöffnung (333) ausgestoßen werden.

13. Trennsäge nach Anspruch 9,
(A) wobei der zweite Luftstrom (360) durch einen Durchgang (356) gezogen wird, der zwischen einer unteren Wand (357) der Batterieaufnahme (72) und dem Gehäuse (15) definiert ist, und wobei sich der Durchgang zwischen der hinteren Ansaugöffnung (335) und der Ausblasöffnung (333) befindet;
oder
(B) wobei die hintere Ansaugöffnung (335) von dem Schneidrad (25) abgewandt ist;
oder
(C) wobei die hintere Ansaugöffnung (335) durch einen linearen Schlitz definiert ist;
oder
(D) wobei die hintere Ansaugöffnung (335) eine erste hintere Ansaugöffnung ist und wobei das Gehäuse (15) eine zweite hintere Ansaugöffnung (340) neben dem hinteren Griff (45) und in Verbindung mit dem Inneren des Gehäuses (15) definiert;
oder
(E) weiter umfassend einen Filter (346), der innerhalb des Gehäuses (15) und neben der vorderen Ansaugöffnung (345) positioniert ist.

## Revendications

1. Tronçonneuse (10) comprenant :
un boîtier (15) ;
un moteur électrique sans balais (65) soutenu à l'intérieur du boîtier, le moteur incluant un arbre de sortie pouvant fonctionner à une vitesse maximale supérieure à 10 000 tours par minute ;
un bloc-batterie (75) couplé au boîtier pour fournir de la puissance au moteur, le bloc-batterie inclut une tension nominale allant jusqu'à 20 volts et est configuré pour délivrer en sortie au moins 100 ampères de courant au moteur afin de maintenir une puissance de sortie d'au moins 1 800 watts ;
une poulie d'entraînement (105) couplée à l'arbre de sortie ;
une poulie entraînée (110) reliée à la poulie d'entraînement par une courroie synchrone (115) ; et
un disque de coupe (25) couplée à la poulie entraînée afin de permettre une co-rotation avec celle-ci, le disque de coupe présentant un diamètre extérieur de 22,9 cm (9 pouces).

2. Tronçonneuse selon la revendication 1, dans laquelle la tronçonneuse produit une pression acoustique inférieure à 0,01 W/m² (100 décibels).

3. Tronçonneuse selon la revendication 1, dans laquelle la tronçonneuse pèse moins de 6,8 kg (15 livres).

4. Tronçonneuse selon la revendication 1, dans laquelle le disque de coupe (25) peut fonctionner pour tourner entre 5 900 tours par minute et 6 300 tours par minute.

5. Tronçonneuse selon la revendication 1,
(A) comprenant en outre une poignée (45, 55) configurée pour être saisie par un opérateur pendant le fonctionnement de la tronçonneuse, dans laquelle la tronçonneuse est configurée pour produire une vibration main-bras au niveau de la poignée inférieure à 3,0 m/s² pendant le fonctionnement sans charge sur le disque de coupe ;
ou
(B) dans laquelle le moteur (65) est configuré pour maintenir une puissance de sortie comprise entre 1 800 watts et 2 400 watts ;
ou
(C) dans laquelle le moteur (65) est configuré pour tirer entre 14 ampères et 18 ampères de courant sans une charge placée sur le disque de coupe (25) ;
ou
(D) dans laquelle la poulie d'entraînement (105) et la poulie entraînée (110) définissent, respectivement, des premier et second axes de rotation (A, B), et dans laquelle une distance entre les premier et second axes de rotation est fixe ;
ou
(E) dans laquelle la poulie d'entraînement (105) et la poulie entraînée (110) sont dimensionnées pour fournir une diminution de 4/1 de la vitesse de rotation de l'arbre de sortie de moteur (65) au disque de coupe (25) ;
ou
(F) dans laquelle l'arbre de sortie de moteur (65) présente une vitesse de sortie maximale comprise entre 10 000 tours par minute et 30 000 tours par minute.

6. Tronçonneuse selon la revendication 1, comprenant en outre :
un bras de support (20) couplé au et s'étendant depuis le boîtier (15) dans une première direction, dans laquelle le disque de coupe (25) est soutenu par le bras de support ;
une poignée arrière (45) s'étendant depuis le boîtier dans une seconde direction opposée, dans laquelle le bloc-batterie (75) est positionné entre le disque de coupe et la poignée arrière ;
un réceptacle de batterie (72) défini par le boîtier dans lequel le bloc-batterie peut être reçu ; et
un couvercle de batterie (230) couplé au boîtier, le couvercle de batterie étant sélectivement mobile entre une position fermée, dans laquelle le bloc-batterie est enfermé par le réceptacle de batterie et le couvercle, et une position ouverte, dans laquelle le bloc-batterie est accessible.

7. Tronçonneuse selon la revendication 6, dans laquelle la poignée arrière (45) est positionnée entièrement derrière le réceptacle de batterie (72) par rapport au disque de coupe (25).

8. Tronçonneuse selon la revendication 6,
(A) comprenant en outre une poignée avant (55) qui s'enroule autour d'une partie supérieure du boîtier (15) ; et, facultativement, dans laquelle le réceptacle de batterie (72) est positionné entre la poignée avant et la poignée arrière (45) ;
ou
(B) dans laquelle le réceptacle de batterie (72) est positionné dans un compartiment du boîtier (15) distinct du moteur (65) ;
ou
(C) dans laquelle le couvercle (230) est maintenu dans la position fermée avec un loquet (240) ;
ou
(D) dans laquelle le bloc-batterie (75) peut être retiré du réceptacle de batterie (72) lorsque le couvercle (230) est dans la position ouverte ;
ou
(E) dans laquelle le réceptacle de batterie (72) définit un trou de drainage (81) qui s'étend du réceptacle de batterie à une partie extérieure du boîtier (15).

9. Tronçonneuse selon la revendication 1, comprenant en outre :
un bras de support (20) couplé au et s'étendant depuis le boîtier (15) dans une première direction, dans laquelle le disque de coupe (25) est soutenu par le bras de support ; et
une poignée arrière (45) s'étendant depuis le boîtier dans une seconde direction opposée ;
dans laquelle le boîtier définit
une ouverture d'admission arrière (335) adjacente à la poignée arrière en communication avec une partie intérieure du boîtier,
une ouverture d'admission avant (345) adjacente au moteur (65) et en communication avec la partie intérieure du boîtier, et
une ouverture d'échappement (333) adjacente au moteur et en communication avec la partie intérieure du boîtier ;
dans laquelle, en réponse à l'activation du moteur, un premier flux d'air de refroidissement (347) est induit par l'ouverture d'admission avant, par le moteur et évacué de l'ouverture d'échappement ; et
dans laquelle, en réponse à l'activation du moteur, un second flux d'air de refroidissement (360) distinct est induit par l'ouverture d'admission arrière, par la partie intérieure du boîtier, par le moteur et évacué par l'ouverture d'échappement.

10. Tronçonneuse selon la revendication 9, dans laquelle le moteur (65) inclut un ventilateur (329) configuré pour induire les premier et second flux d'air (347, 360) lorsque le moteur est activé.

11. Tronçonneuse selon la revendication 9, dans laquelle l'ouverture d'échappement (333) est positionnée sous le moteur (65) sur une partie inférieure du boîtier (15).

12. Tronçonneuse selon la revendication 9, dans laquelle le premier flux d'air (347) et le second flux d'air (360) sont évacués radialement par l'ouverture d'échappement (333).

13. Tronçonneuse selon la revendication 9,
(A) dans laquelle le second flux d'air (360) est tiré par un passage (356) défini entre une paroi inférieure (357) du réceptacle de batterie (72) et le boîtier (15), et dans laquelle le passage est situé entre l'ouverture d'admission arrière (335) et l'ouverture d'échappement (333) ;
ou
(B) dans laquelle l'ouverture d'admission arrière (335) est orientée à l'opposé du disque de coupe (25) ;
ou
(C) dans laquelle l'ouverture d'admission arrière (335) est définie par une fente linéaire ;
ou
(D) dans laquelle l'ouverture d'admission arrière (335) est une première ouverture d'admission arrière, et dans laquelle le boîtier (15) définit une seconde ouverture d'admission arrière (340) adjacente à la poignée arrière (45) et en communication avec la partie intérieure du boîtier (15) ;
ou
(E) comprenant en outre un filtre (346) positionné à l'intérieur du boîtier (15) et adjacent à l'ouverture d'admission avant (345).
